# EUROPÄISCHE PATENTSCHRIFT

(11) **EP 2 323 878 B1**
(45) Veröffentlichungstag und Bekanntmachung des Hinweises auf die Patenterteilung: **10.04.2013**
(21) Anmeldenummer: 09776955.8
(22) Anmeldetag: 04.07.2009
(51) Int. Cl.: B60S 1/40, B60S 1/38

(54) **SCHEIBENWISCHER AN EINEM FAHRZEUG**
WINDSHIELD WIPER ON A VEHICLE
ESSUIE-GLACE SUR UN VÉHICULE

(30) Priorität: 13.08.2008 DE 102008038981
(43) Veröffentlichungstag der Anmeldung: 25.05.2011
(73) Patentinhaber: Volkswagen Aktiengesellschaft, 38440 Wolfsburg (DE)
(72) Erfinder: JUNGGEBAUER, Jens, 38104 Braunschweig (DE)
(86) Internationale Anmeldenummer: PCT/EP2009/004837
(87) Internationale Veröffentlichungsnummer: WO 2010/017861

(56) Entgegenhaltungen:
- WO-A-03/084789
- WO-A-2004/026646
- DE-A1- 10 320 930
- DE-A1-102005 025 542
- DE-A1-102008 011 449
- US-A1- 2004 211 021

## Beschreibung

Die Erfindung betrifft einen Scheibenwischer an einem Fahrzeug, gebildet aus einem Scheibenwischeram mit einem Befestigungsteil zur drehfesten Anordnung an einer pendelnd angetriebenen Antriebswelle, einem an diesem angelenkten Gelenkteil mit einer Zugfeder und einem am Gelenkteil vermittels einer Anschlussvorrichtung angeordneten flachbauenden haltebügellosen Wischerblatt, insbesondere einen Heck-Scheibenwischer.

In der DE 102 12 441 A1 ist eine Wischvorrichtung mit einem Scheibenwischerarm und einem flachbauenden haltebügellosen Wischerblatt beschrieben. Dieses ist aus einem federelastischen Tragelement, einer an diesem angeordneten gummielastischen Wischleiste und einer Anschlussvorrichtung für den Scheibenwischerarm gebildet. Der Scheibenwischerarm weist ein Befestigungsteil zur drehfesten Anordnung an einer pendelnd angetriebenen Antriebswelle und ein langgestrecktes U-profilförmiges Gelenkteil mit einer am Befestigungsteil angreifenden Zugfeder und mit einer am freien Ende des Gelenkteils ausgebildeten Rastaufnahme für die Anschlussvorrichtung auf. Diese ist aus einer am Wischerblatt befestigten Haltevorrichtung und einem an der Haltevorrichtung angelenkten Verbindungsteil zur weitgehend formschlüssigen Anordnung am Gelenkteil und für eine lösbare Rastverbindung mit diesem ausgebildet. Die Montage und eine Demontage des Wischerblattes erfolgen in Richtung der Längserstreckung desselben und des Glenkteils, wobei das Verbindungsteil am freien Ende des Gelenkteils in dieses eingeführt wird.

Das Verbindungselement ist dabei mit einem einstückig angeformten Endstück versehen, das im montierten Zustand wenigstens abschnittsweise formschlüssig an der endseitigen Stirnseite des Gelenkteils anliegt. Dadurch wird eine definierte Position des Wischerblattes gegenüber dem freien Ende des Gelenkteils bzw. des Scheibenwischerarmes erreicht. Vorzugsweise ist das Endstück so gestaltet, dass dieses gelenkteilseitig der Kontur des freien Endes des Scheibenwischerarmes folgt, so dass eine weitgehend ebene und aerodynamische Oberfläche erzielt wird. Allerdings bilden das Endstück und das Gelenkteil eine Bauteilfuge quer zu deren Längserstreckung aus, die optisch als störend empfunden werden kann, und die Anordnung ist aufwendig. Der Scheibenwischerarm wird als mehrteiliges Bauteil wahrgenommen. Toleranzabweichungen verstärken das Missempfinden. Zudem kommt, dass das verwindungssteife Gelenkteil aus einem formstabilen festen Kunststoff gefertigt ist und das Verbindungsteil wegen der Rastverbindung aus einem elastischen Kunststoff, wodurch infolge der gegebenen Farb- und Strukturunterschiede verschiedene Oberflächenanmutungen erzeugt werden und sich das Endstück des Verbindungsteiles deutlich vom Gelenkteil abhebt. Eine aufwändige Lackierung kann zwar die optische Gesamtanmutung verbessern, jedoch die durch die verschiedenen Materialien gegebenen Unterschiede in den Oberflächenanmutungen der miteinander verbundenen Bauteile nicht vollständig beseitigen.

DE-A-10320930 offenbart den Oberbegriff des Anspruchs 1.

Es ist Aufgabe der Erfindung, einen Scheibenwischer an einem Fahrzeug nach dem Oberbegriff des Anspruchs 1 so zu gestalten, dass dessen optische Anmutung deutlich verbessert ist.

Diese Aufgabe wird bei einem Scheibenwischer nach dem Oberbegriff des Anspruchs 1 durch dessen kennzeichnende Merkmale gelöst. Vorteilhafte Ausgestaltungen sind in den Unteransprüchen aufgeführt.

Die Erfindung besteht in einem Scheibenwischer mit einem Scheibenwischerarm, der ein Befestigungsteil und ein langgestrecktes Gelenkteil mit einem U-profilförmigen Querschnitt und wenigstens einer Rastöffnung aufweist, an dessen Ende ein Wischerblatt vermittels einer Anschlussvorrichtung gehaltert ist, das aus einem federelastischen Tragelement und einer gummielastischen Wischleiste gebildet ist. Die Anschlussvorrichtung besteht dabei aus einer mit dem Wischerblatt fest verbundenen Haltevorrichtung und einem an der Haltevorrichtung angelenkten Verbindungsteil für eine Anordnung im Gelenkteil und für eine lösbare Rastverbindung mit diesem, wobei das Verbindungsteil im montierten/ Verrastungszustand des Wischerblattes am Scheibenwischerarm vom Endbereich des Gelenkteils vollständig aufgenommen und somit nicht sichtbar ist. Damit ist ein Scheibenwischer geschaffen, bei dem das Verbindungsteil der Anschlussvorrichtung endstückfrei ist, so dass eine Bauteilfuge im Endbereich des Gelenkteils entfällt. Eine aufwändige Lackierung zur Verbesserung der optischen Anmutung kann entfallen, verbunden mit einer Kostenreduzierung.

Die Haltevorrichtung kann als am Tragelement, das vorzugsweise aus zwei parallel angeordneten Federschienen gebildet ist, klemmend befestigter Reiter ausgebildet sein, der die Wischleiste auf der der Wischlippe abgewandten Seite übergreift und auf dieser Seite mit einem Gelenkbolzen oder beidseits quer zur Längserstreckung des Wischerblattes abstehenden Gelenkzapfen versehen ist. An diesen ist das Verbindungsteil angelenkt, das den Reiter auf der der Wischlippe abgewandten Seite U-förmig einschließt und dabei vermittels jeweils einer Bohrung in seinen Schenkeln mit dem Gelenkbolzen bzw. den -zapfen drehbeweglich in Eingriff steht. Die freien Enden bzw. Kanten der Schenkel stellen dabei Gleitkufen dar, die mit am Gelenkteil angeformten Führungsschienen korrespondieren, die so angeordnet sind, dass das Verbindungsteil formschlüssig im Gelenkteil zur Anordnung gelangt. Zudem weist das Verbindungsteil in dem die Schenkel verbindenden Stegbereich eine elastisch biegbare Rastzunge mit einem Rastkopf auf, der mit dieser korrespondierenden Rastöffnung, die in dem die Schenkel verbindendem Stegbereich des Gelenkteils ausgebildet ist, eine Rastverbindung herstellt. Die Rastzunge kann vorteilhaft an der in der Einschubrichtung des Verbindungsteils vorderen Stirnseite angeformt sein, wodurch sich der Einschubweg verkürzt. Auf diese Weise ist das Verbindungsteil und damit das gesamte Wischerblatt auf einfache Weise am Gelenkteil verliersicher und lösbar anordbar.

Die Führungsschienen können verschieden angeordnet sein, und das Verbindungsteil ist in Abhängigkeit von der Anordnung der Führungsschienen auf unterschiedliche Weise in das Gelenkteil einführbar und in diesem gehaltert.

Beispielsweise können die Führungsschienen parallel zur Längserstreckung des Gelenkteils und dabei derart angeordnet sein, dass das Verbindungsteil nach Art eines Bajonettverschlusses quer zur Längserstreckung des Gelenkteils in dieses einführbar und entlang der Führungsschienen bis zur Verrastung des Rastkopfes in/ mit der Rastöffnung verschiebbar ist. Die Führungsschienen können dabei auf der dem Befestigungsteil abgewandten Seite einen solchen Abstand vom Ende des Gelenkteils haben, dass das Verbindungsteil zwischen diesem Ende und den Führungsschienen einführbar ist. Dieser Abstand kann durch eine entsprechende Ausbildung des Verbindungsteils gering gehalten werden. Auch ist es möglich, die Führungsschienen derart anzuordnen, dass das Verbindungsteil befestigungsteilseitig in das Gelenkteil eingeführt und anschließend in Richtung des Endes des Gelenkteils verschoben wird. Das Gelenkteil ist bei dieser Ausführung an seinem Ende-geschlossen, wobei das Ende jedoch so gestaltet ist, dass eine Schwenkbewegung des Wischerblattes um-die-Gelenkzapfen und somit gegenüber dem Gelenkteil in Abhängigkeit von der Scheibenwölbung ermöglicht ist, beispielsweise durch eine flache Ausnehmung oder eine Anschrägung der freien Schenkelenden des Gelenkteils.

Bei einer weiteren Ausführung ist die am freien Ende des Gelenkteils ausgebildete Ausnehmung derart erweitert, dass diese zugleich als Montageöffnung für das Verbindungsteil dient, so dass letzteres von der Stirnseite des Gelenkteils in dieses eingeführt und auf den entsprechend angeordneten Führungsschienen bis zur Verrastung mit diesem eingeschoben werden kann. Dabei kann die Ausnehmung bei entsprechender Ausbildung des Verbindungsteils klein gehalten werden.

Alternativ dazu können die Führungsschienen schräg und dabei in Richtung des Befestigungsteils ansteigend angeordnet sein und dabei auf der dem Befestigungsteil abgewandten Seite einen solchen Abstand vom Ende des Gelenkteils haben, dass das am Reiter in eine deutliche Schrägstellung geschwenkte Verbindungsteil in das Gelenkteil einführbar ist. Das Verbindungsteil kann dabei so gestaltet sein, dass dessen Schwenken in die Schrägstellung begünstigt ist. Auch kann die elastisch biegbare Rastzunge im spitzen Winkel angeformt und nach der dem Reiter abgewandten Seite abstehen.

Die Erfindung wird nachstehend anhand von Ausführungsbeispielen erläutert. In den zugehörigen Zeichnungen zeigen:
- Fig. 1:: einen Scheibenwischer,
- Fig. 2:: ein Wischerblatt zur Anordnung am Gelenkteil des Scheibenwischerarmes, mit einer ersten Ausführung einer Anschlussvorrichtung mit einem Verbindungsteil für das Gelenkteil,
- Fig. 3:: das Verbindungsteil der Anschlussvorrichtung,
- Fig. 4:: dieses in der Unteransicht,
- Fig. 5:: den Endbereich des Gelenkteils des Scheibenwischerarmes,
- Fig. 6:: dieses mit dem angeordnetem Verbindungsteil ohne einen mit dem demselben gelenkig verbundenen Reiter als Bestandteil der Anschlussvorrichtung in der Unteransicht,
- Fig. 7 und 8/ 8a:: ein Wischerblatt und einen Scheibenwischerwischer mit einer zweiten Anschlussvorrichtung, mit aufgebrochenem Gelenkteil,
- Fig. 9/9a und 10/10a:: ein Wischerblatt und einen Scheibenwischerarm mit einer dritten Ausführung einer Anschlussvorrichtung, mit aufgebrochenem Gelenkteil und
- Fig. 11/11a und 12/12a:: ein Wischerblatt und einen Scheibenwischerarm mit einer vierten Ausführung einer Anschlussvorrichtung, mit aufgebrochenem Gelenkteil.

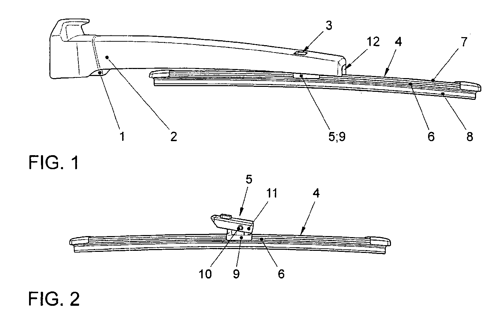

Der in Fig. 1 und 2 gezeigte Scheibenwischer weist einen aus einem Befestigungsteil 1 und einem langgestreckten Gelenkteil 2 aus PBT mit einem U-profilförmigen Querschnitt und einer Rastöffnung 3 gebildeten Scheibenwischerarm und ein Wischerblatt 4 auf. Dieses (4) ist vermittels einer Anschlussvorrichtung 5 im Endbereich des Gelenkteils 2 angeordnet und besteht in bekannter Weise aus einem federelastischen Tragelement, das aus zwei parallel angeordneten Federschienen 6 gebildet ist, und einer an diesen gehalterten gummielastischen Wischleiste 7 mit einer Wischlippe 8. Die Anschlussvorrichtung 5 weist einen an den Federschienen 6 klemmend befestigten Reiter 9 als Haltevorrichtung und ein an diesem (9) vermittels eines Anschlussbolzens 10 angelenktes Verbindungsteil 11 für eine formschlüssige Anordnung im Gelenkteil 2 und für eine lösbare Rastverbindung mit diesem (2) auf. Der Reiter 9 übergreift die Wischleiste 7 auf der der Wischlippe 8 abgewandten Seite und ist auf dieser Seite mit dem quer zur Längserstreckung des Wischerblattes 4 angeordneten und beidseits desselben vorstehenden Anschlussbolzen 10 versehen. Am freien Ende des Gelenkteils 2 ist in einer dieser abschließenden Stirnwand eine Ausnehmung 12 eingebracht, die zugleich Montageöffnung für das Wischerblatt 4 bzw. das Verbindungsteil 11 ist.

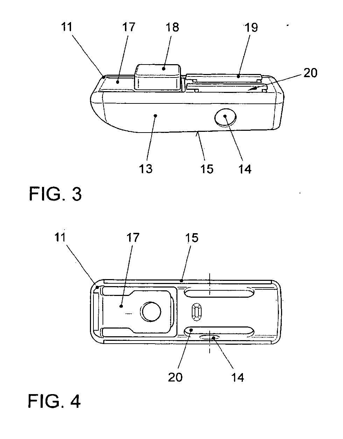

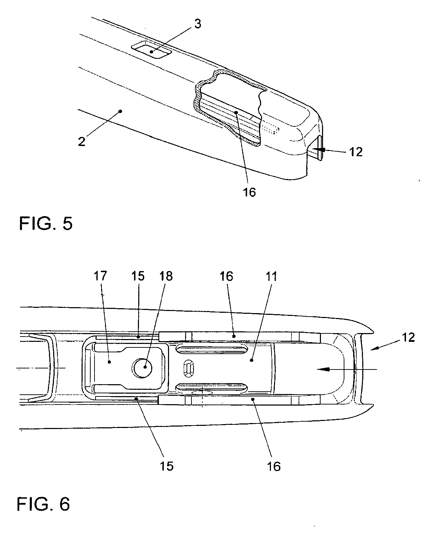

Das in den Fig. 3 und 4 gezeigte Verbindungsteil 11, gefertigt aus POM, ist zur gelenkigen Anordnung am Reiter im Profil 9 U-förmig gestaltet. Fig. 2 zeigt das am Reiter 9 angeordnete Verbindungsteil 11, dass diesen auf der den Federschienen 6 abgewandten Seite umschließt. In den beiden Schenkeln 13 des Verbindungsteils 10 befindet sich jeweils eine Bohrung 14 zur drehbeweglichen Befestigung desselben am Anschlussbolzen 10. Die freien Kanten der Schenkel 13 stellen zugleich Gleitkufen 15 und Fixierungselemente für die Anordnung im Gelenkteil 2 dar, das für diese Führungsschienen (16, Fig. 5, 6) aufweist. In dem die Schenkel 13 des Verbindungsteils 11 verbindenden Stegbereich ist eine Rastzunge 17 mit einem Rastkopf 18 ausgebildet, der im Montagezustand mit der Rastöffnung 3 des Gelenkteils 2 verrastet ist (Fig. 1, Fig. 5), wobei die Rastzunge 17 an der Stirnseite des Verbindungsteils 11 angeformt ist, die den größeren Abstand zu den Bohrungen 14 hat. Das ist auch die Montagefrontseite. An dem die Schenkel 13 verbindenden Stegbereich sind an der Oberseite zwei Rippen 19 angeformt, die als Gleitschienen und als Anlageelemente für das Gelenkteil 2 dienen. Neben diesen (19) ist jeweils eine langgestreckte Ausnehmung 20 für einen Eingriff von den Anschlussbolzen 10 halternden Wandungsbereichen des Reiters 9 angeordnet (nicht weiter dargestellt), der sich durch die relative Schwenkbewegung zwischen dem Verbindungsteil 11 und dem Reiter 9 im Wischerbetrieb ergeben kann.

In den Fig. 5 und 6 ist der Endbereich des Gelenkteils 2 dargestellt, in Fig. 5 aufgebrochen und in Fig. 6 mit dem in diesem verrasteten Verbindungsteil 11. Fig. 5 zeigt dabei die Rastöffnung 3, die Ausnehmung 12 und im aufgebrochenen Bereich an der Innenseite der hinteren Wandung die an dieser angeformte Führungsschiene 16 für die auf dieser gleitenden und sich im Verrastungszustand abstützenden Gleitkufe 15 des Verbindungsteils 11. In Fig. 6 sind die beidseits im Gelenkteil 2 angeformten Führungsschienen 16 zu erkennen. Das Verbindungsteil ist zwischen diesen (16) und dem Stegbereich des U-profilförmigen Gelenkteils 2 angeordnet, dabei mit den Gleitkufen 15 an den Führungsschienen 16 und mit den Rippen am Stegbereich abgestützt. Dabei ist das Verbindungsteil 11 von der Ausnehmung 12 her (Pfeil) bei Niederdrücken des Rastkopfes 18 so weit in das Gelenkteil 2 eingeschoben, bis dieser (18) in die Rastöffnung 3 einrastet. Auf diese Weise ist das Verbindungsteil 11 am Gelenkteil 2 unverlierbar festgelegt.

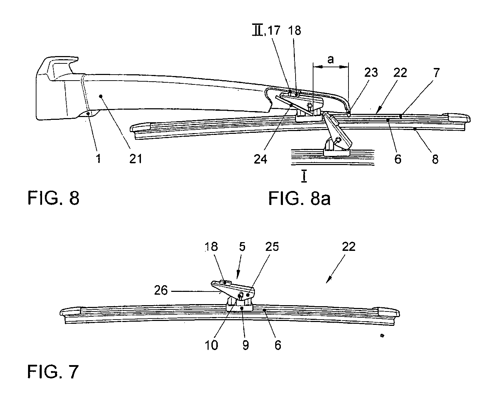

Bei dem in den Fig. 7 und 8 gezeigten Scheibenwischer ist der Endbereich des Gelenkteils 21 bis auf eine Schwenkbewegung des Wischerblattes 22 ermöglichende Ausnehmung 23 geschlossen. Die an den beiden Schenkeln des Gelenkteils 21 innenseitig angeformten Führungsschienen 24 sind in Richtung des Befestigungsteils 1 ansteigend angeordnet, und das Verbindungsteil 25 ist mit seinen Gleitkufen 26 an diese Schrägstellung angepasst. Zudem ist das Verbindungsteil 25 auf der den Gleitkufen 26 abgewandten Seite der Gelenkzapfen 10 ebenfalls angeschrägt, damit dieses (25) gegenüber dem Wischerblatt 22 in eine deutliche Schrägstellung bringbar ist, die in der Fig. 8a dargestellt ist. Diese Schrägstellung ist erforderlich, wenn das Wischerblatt 22 nahe dem Ende des Gelenkteils 21 angeordnet sein soll und die Führungsschienen 24 dazu einen relativ kleinen Abstand a von diesem Ende haben müssen. Dieser Abstand a ist so gewählt, dass das am Wischerblatt 22 aufgestellte Verbindungsteil 25 in das Gelenkteil 21 einführbar ist. Diese Montagestellung I ist durch Fig. 8a angedeutet.

Von der Montagestellung I ausgehend, wird das Verbindungsteil 25 in das Gelenkteil 21 eingeführt und in Richtung des Befestigungsteils 1 verschoben, wodurch es mit seinen Gleitkufen 26 auf die Führungsschienen 24 gelangt und so weit auf diesen gleitet, bis es mit seinem Rastkopf 18 in Eingriff mit der Rastöffnung 17 gelangt. In dieser Verrastungsposition 11 ist das Verbindungsteil 25 formschlüssig im Gelenkteil 21 angeordnet, und das Wischerblatt 4 ist an diesem (21) unverlierbar gehaltert.

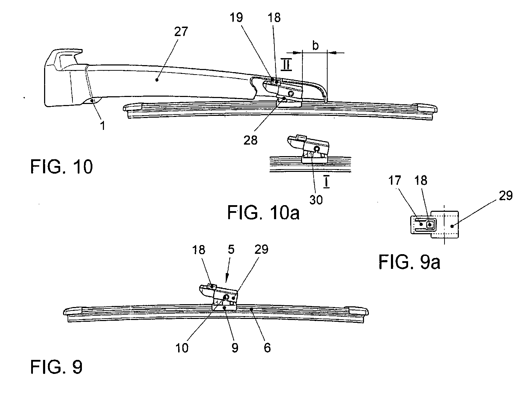

Die Fig. 9/9a und 10/10a zeigen eine dritte Ausführung einer Anschlussvorrichtung für ein Wischerblatt am-Gelenkteil 27 eines Scheibenwischerarmes. Bei dieser sind die Führungsschienen 28 im Gelenkteil 27 parallel zu dessen Längserstreckung und derart angeordnet, dass das Verbindungsteil 29 nach Art eines Bajonettverschlusses quer zur Längserstreckung des Gelenkteils 27 in dieses einführbar und anschließend entlang der Führungsschienen 28 bis zur Verrastung des Rastkopfes 18 in der Rastöffnung 19 verschiebbar ist.

Um den Einführbereich und den Abstand b der Führungsschienen 28 vom Ende des Gelenkteils 27 klein zuhalten, ist das Verbindungsteil 29 abgesetzt, wie Fig. 9a in einer Draufsicht zeigt. Der schmale Bereich desselben (29) mit der Rastzunge 17 und dem Rastkopf 18 wird beim Einführen des Verbindungsteils 29 in das Gelenkteil 27 (Montageposition I, Fig. 10a) zwischen die Führungsschienen 28 hindurch bis zur Anlage desselben (29) an dem die Schenkel verbindenden Stegbereich des Gelenkteils 27 eingeschoben, anschließend mit den Gleitkufen 30 in Eingriff mit den Führungsschienen 28 gebracht und bis zum Einrasten des Rastkopfes 18 in der Rastöffnung 19 in Richtung des Befestigungsteils 1 verschoben. In der Verrastungsposition II befindet sich das Verbindungsteil 29 im formschlüssigen Eingriff mit dem Gelenkteil 27.

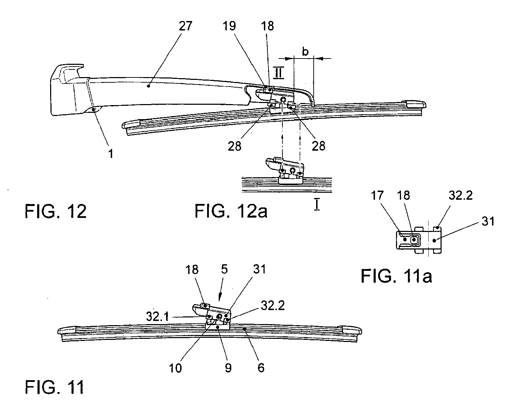

Eine weitere erhebliche Verkleinerung des Abstandes b der Führungsschienen 28 vom Ende des Gelenkteils 27 kann erreicht werden, wenn diese (28) unterbrochen und wenn am Verbindungsteil 31 beidseits jeweils eine unterbrochene Gleitschiene 32 für diese (28) angeformt ist. In Fig. 11 ist das Wischerblatt mit diesem Verbindungsteil 31 gezeigt, und in Fig. 11a das Verbindungsteil 31 in einer Draufsicht. In den Fig. 12 und 12a ist die Montagestellung I des Verbindungsteils 31 zum Gelenkteil 27 dargestellt, in der die beiden durch die Unterbrechung der Gleitschienen 32 gebildeten Gleitschienenabschnitte 32.1 und 32.2 so zur unterbrochenen Führungsschiene 28 positioniert sind, dass der eine Gleitschienenabschnitt 32.2 unterhalb der zwischen dem Ende des Gelenkteils 27 und der Führungsschiene 28 gebildeten Lücke (Abstand b) und der andere unterhalb der Unterbrechung der Führungsschiene 28 positioniert sind. Durch Einführen des Verbindungsteils 31 in das Gelenkteil 27 in Pfeilrichtung und bajonettverschlussartiges Aufschieben der Gleitschienenabschnitte 32.1 und 32.2 auf die Führungsschiene 28 bis zur Verrastungsposition des Rastknopfes 18 mit der Rastöffnung 19 (Position II) wird das Verbindungsteil 31 formschlüssig und verliersicher mit dem Gelenkteil 27 verbunden.

### Bezugszeichenliste

- 1: Befestigungsteil
- 2: Gelenkteil
- 3: Rastöffnung
- 4: Wischerblatt
- 5: Anschlussvorrichtung
- 6: Federschiene
- 7: Wischleiste
- 8: Wischlippe
- 9: Reiter
- 10: Gelenkzapfen
- 11: Verbindungsteil
- 12: Ausnehmung
- 13: Schenkel
- 14: Bohrung
- 15: Gleitkufe
- 16: Führungsschiene
- 17: Rastzunge
- 18: Rastkopf
- 19: Rippe
- 20: Ausnehmung
- 21: Gelenkteil
- 22: Wischerblatt
- 23: Ausnehmung
- 24: Führungsschienen
- 25: Verbindungsteil
- 26: Gleitkufe
- 27: Gelenkteil
- 28: Führungsschiene
- 29: Verbindungsteil
- 30: Gleitkufe
- 31: Verbindungsteil
- 32: Gleitschiene
- 32.1: Gleitschienenabschnitt
- 32.2: Gleitschienenabschnitt
- a: Abstand
- b: Abstand
- I: Montageposition
- II: Verrastungsposition

## Patentansprüche

1. Scheibenwischer an einem Fahrzeug,
mit einem Scheibenwischerarm, der ein Befestigungsteil (1) und ein langgestrecktes Gelenkteil (21) mit einem U-Profilförmigen Querschnitt mit wenigstens einer Rastöffnung (3) aufweist,
und mit einem vermittels einer Anschlussvorrichtung (5) am freien Ende des Gelenkteils (21) gehalterten Wischerblatt (22), das aus einem federelastischen Tragelement (6) und einer gummielastischen Wischleiste (7) gebildet ist,
- wobei die Anschlussvorrichtung (5) eine am Wischerblatt (22) befestigte Haltevorrichtung und ein an dieser angelenktes Verbindungsteil (25) für eine Anordnung im Gelenkteil (21) und für eine lösbare Rastverbindung mit diesem aufweist,
- wobei die Haltevorrichtung als am Tragelement klemmend befestigter Reiter (9) ausgebildet ist, der die Wischleiste (7) auf der der Wischlippe (8) abgewandten Seite übergreift und auf dieser Seite mit beidseits desselben quer zur Längserstreckung des Wischerblattes (22) vorstehenden Gelenkzapfen (10) versehen ist,
- wobei das Verbindungsteil (25) die Haltevorrichtung auf der dem Tragelement (6) abgewandten Seite U-förmig umschließt und dabei mit seinen Schenkeln (13) vermittels jeweils einer an diesen ausgebildeten und mit dem jeweiligen Gelenkzapfen (10) korrespondierenden Bohrung (14) drehbeweglich angeordnet ist,
- wobei das Verbindungsteil (25) der Anschlussvorrichtung (5) vom Endbereich des Gelenkteils (27) vollständig aufgenommen und von diesem umschlossen ist,
- und wobei die freien Kanten der Schenkel (13) des Verbindungsteils (5) als Gleitkufen (15) für Führungsschienen (24) dienen, die an den beiden Schenkeln des Gelenkteils (21) angeformt sind,
**dadurch gekennzeichnet, dass**
- die Führungsschienen (24) in Richtung des Befestigungsteils (1) ansteigend angeordnet sind und dabei auf der diesem (1) abgewandten Seite einen solchen Abstand vom Ende des Gelenkteils (21) haben, dass das Verbindungsteil (25) in das Gelenkteil (21) einführbar ist.

2. Scheibenwischer nach Anspruch 1, **dadurch gekennzeichnet, dass** in dem die Schenkel (13) des Verbindungsteils (25) verbindenden Stegbereich eine elastisch biegbare Rastzunge (17) mit einem Rastkopf (18) für die im Gelenkteil (21) angeordnete Rastöffnung (3) ausgebildet ist.

3. Scheibenwischer nach Anspruch 2, **dadurch gekennzeichnet, dass** die Rastzunge (17) an der in Einschubrichtung des Verbindungsteils (25) vorderen Stirnseite angeformt ist.

4. Scheibenwischer nach einem der vorhergehenden Ansprüche, **dadurch gekennzeichnet, dass** das Gelenkteil (21) aus einem elastischen Kunststoff besteht.

5. Scheibenwischer nach einem der vorhergehenden Ansprüche, **dadurch gekennzeichnet, dass** das Gelenkteil (21) an seinem freien Ende eine Ausnehmung (23) aufweist oder an seinen Schenkelkanten angeschrägt ist, so dass eine vorbestimmte Schwenkbewegung des Wischerblattes (22) um die Gelenkzapfen (10) ermöglicht ist.

6. Scheibenwischer nach Anspruch 5, **dadurch gekennzeichnet, dass** die Ausnehmung (23) in einer das Gelenkteil (21) abschließenden Stirnwand eingebracht ist.

## Claims

1. Windscreen wiper on a vehicle,
with a windscreen wiper arm which has a fastening part (1) and an elongated articulated part (21) having a cross section in the shape of a U profile and at least one latching opening (3),
and with a wiper blade (22) which is held at the free end of the articulated part (21) by means of a connecting device (5) and is formed from a resilient supporting element (6) and an elastomeric wiper strip (7),
- wherein the connecting device (5) has a holding device fastened to the wiper blade (22) and a joining part (25), which is articulated on said holding device, for arrangement in the articulated part (21) and for a releasable latching connection to the latter,
- wherein the holding device is in the form of a carrier (9) which is fastened in a clamping manner to the supporting element, engages over the wiper strip (7) on the side facing away from the wiper lip (8) and is provided on this side with hinge pins (10) which protrude transversely with respect to the longitudinal extent of the wiper blade (22) on both sides of said carrier,
- wherein the joining part (25) surrounds the holding device in a U-shaped manner on the side facing away from the supporting element (6) and is arranged such that the limbs (13) thereof are rotatable by means of a bore (14) which is formed on said limbs and corresponds to the particular hinge pin (10),
- wherein the joining part (25) of the connecting device (5) is completely accommodated by the end region of the articulated part (27) and is surrounded by the latter,
- and wherein the free edges of the limbs (13) of the joining part (5) serve as sliding runners (15) for guide rails (24) which are integrally formed on the two limbs of the articulated part (21),
**characterized in that**
- the guide rails (24) are arranged rising in the direction of the fastening part (1) and, on the side facing away from the latter (1), are at such a distance from the end of the articulated part (21) that the joining part (25) can be introduced into the articulated part (21).

2. Windscreen wiper according to Claim 1, **characterized in that** an elastically bendable latching tongue (17) having a latching head (18) for the latching opening (3) arranged in the articulated part (21) is formed in the web region connecting the limbs (13) of the joining part (25).

3. Windscreen wiper according to Claim 2, **characterized in that** the latching tongue (17) is integrally formed on the front end side in the insertion direction of the joining part (25).

4. Windscreen wiper according to one of the preceding claims, **characterized in that** the articulated part (21) is composed of a flexible plastic.

5. Windscreen wiper according to one of the preceding claims, **characterized in that** the articulated part (21) has a recess (23) at the free end thereof or is bevelled at the limb edges thereof such that a predetermined pivoting movement of the wiper blade (22) about the hinge pins (10) is made possible.

6. Windscreen wiper according to Claim 5, **characterized in that** the recess (23) is provided in an end wall forming the end of the articulated part (21).

## Revendications

1. Essuie-glace sur un véhicule,
comprenant un bras d'essuie-glace qui comprend une partie de fixation (1) et une partie d'articulation allongée (21) présentant une section transversale en forme de profil en U présentant au moins une ouverture d'encliquetage (3),
et comprenant un balai d'essuie-glace (22) maintenu sur l'extrémité libre de la partie d'articulation (21) au moyen d'un dispositif de raccordement (5), lequel balai d'essuie-glace est formé d'un élément de support (6) élastique à ressort et d'une raclette de balai d'essuie-glace (7) présentant l'élasticité du caoutchouc,
- le dispositif de raccordement (5) comprenant un dispositif de retenue fixé au balai d'essuie-glace (22) et une partie de liaison (25) articulée sur ce dispositif de retenue pour un agencement dans la partie d'articulation (21) et pour une liaison par encliquetage amovible avec cette partie d'articulation,
- le dispositif de retenue étant réalisé sous forme de coulisseau (9) fixé de manière serrée sur l'élément de support, lequel coulisseau recouvre la raclette de balai d'essuie-glace (7) du côté opposé à la lèvre de balai d'essuie-glace (8) et est pourvu, de ce côté, d'axes d'articulation (10) faisant saillie transversalement par rapport à l'étendue longitudinale du balai d'essuie-glace (22), de part et d'autre de ce coulisseau,
- la partie de liaison (25) entourant en forme de U le dispositif de retenue du côté opposé à l'élément de support (6) et étant en l'occurrence disposée de manière mobile en rotation, à l'aide de ses branches (13), au moyen d'un alésage respectif (14) réalisé sur ces dernières et correspondant à l'axe d'articulation respectif (10),
- la partie de liaison (25) du dispositif de raccordement (5) étant entièrement reçue par la région d'extrémité de la partie d'articulation (27) et entourée par celle-ci,
- et les arêtes libres des branches (13) de la partie de liaison (5) servant de patins de glissement (15) pour des rails de guidage (24) qui sont formés sur les deux branches de la partie d'articulation (21),
**caractérisé en ce que**
- les rails de guidage (24) sont disposés de marnière ascendante en direction de la partie de fixation (1) et en l'occurrence, du côté opposé à cette partie de fixation (1), présentent un écartement par rapport à l'extrémité de la partie d'articulation (21) tel que la partie de liaison (25) peut être insérée dans la partie d'articulation (21).

2. Essuie-glace selon la revendication 1, **caractérisé en ce qu'**une languette d'encliquetage (17) élastiquement flexible munie d'une tête d'encliquetage (18) pour l'ouverture d'encliquetage (3) disposée dans la partie d'articulation (21) est réalisée dans la région jointive reliant les branches (13) de la partie de liaison (25).

3. Essuie-glace selon la revendication 2, **caractérisé en ce que** la languette d'encliquetage (17) est formée sur la face frontale antérieure dans la direction d'insertion de la partie de liaison (25).

4. Essuie-glace selon l'une quelconque des revendications précédentes, **caractérisé en ce que** la partie d'articulation (21) est constituée d'une matière plastique élastique.

5. Essuie-glace selon l'une quelconque des revendications précédentes, **caractérisé en ce que** la partie d'articulation (21) présente, à son extrémité libre, un évidement (23) ou est biseautée au niveau de ses arêtes de branche, de telle sorte qu'un mouvement de pivotement prédéfini du balai d'essuie-glace (22) autour de l'axe d'articulation (10) soit possible.

6. Essuie-glace selon là revendication 5, **caractérisé en ce que** l'évidement (23) est ménagé dans une paroi frontale terminant la partie d'articulation (21).
